# EUROPÄISCHE PATENTSCHRIFT

(11) **EP 2 531 677 B1**
(45) Veröffentlichungstag und Bekanntmachung des Hinweises auf die Patenterteilung: **04.01.2017**
(21) Anmeldenummer: 11702008.1
(22) Anmeldetag: 27.01.2011
(51) Int. Cl.: E05B 15/02, F16P 3/08

(54) **VERRIEGELUNGSEINRICHTUNG MIT ZUHALTUNG FÜR SCHUTZTÜREN**
LOCKING APPARATUS HAVING A TUMBLER FOR SAFETY DOORS
DISPOSITIF DE VERROUILLAGE AVEC GÂCHETTE POUR PORTES DE PROTECTION

(30) Priorität: 02.02.2010 DE 102010007388
(43) Veröffentlichungstag der Anmeldung: 12.12.2012
(73) Patentinhaber: Pilz Auslandsbeteiligungen GmbH, 73760 Ostfildern (DE)
(72) Erfinder: PULLMANN, Juergen, 73760 Ostfildern (DE); RUPP, Roland, 73760 Ostfildern (DE); VEIT, Andreas, 73760 Ostfildern (DE)
(74) Vertreter: Witte, Weller & Partner Patentanwälte mbB
(86) Internationale Anmeldenummer: PCT/EP2011/051166
(87) Internationale Veröffentlichungsnummer: WO 2011/095433

(56) Entgegenhaltungen:
- EP-A2- 1 795 676
- DE-A1- 3 312 657
- DE-A1- 10 157 157
- DE-A1- 19 735 859
- US-A- 5 464 954

## Beschreibung

Die Erfindung betrifft eine Verriegelungseinrichtung mit Zuhaltung für Schutztüren, mit einem Türteil zur Befestigung an einer beweglichen Schutztür und mit einem Rahmenteil zur Befestigung an einem Türgegenstück, wobei das Rahmenteil eine Aufnahme aufweist und das Türteil einen Betätiger aufweist, der der Aufnahme zuführbar ist, wobei das Rahmenteil ferner ein Sperrglied aufweist, das zwischen einer Freigabeposition, bei der der Betätiger selektiv freigegeben werden kann, und einer Blockierposition, bei der der Betätiger selektiv gegenüber der Aufnahme festlegbar ist, verlagerbar ist, wobei der Betätiger über ein elastisches Ausgleichselement an dem Türteil aufgenommen ist.

Eine derartige Verriegelungseinrichtung ist aus der DE 197 35 859 A1 bekannt.

Mit bekannten Verriegelungseinrichtungen ist es grundsätzlich möglich, Maschinen und Anlagen, von denen im Betrieb eine Gefahr ausgeht, gegen unbefugten Zugriff zu sichern. Ein Anlauf solcher Maschinen soll nur dann erlaubt sein, wenn die Verriegelungseinrichtung ein "Tür zu"-Signal liefert. Des weiteren soll ein erneuter Zugang zu der Maschinen häufig nur gestattet sein, wenn die Maschine keine Gefahr mehr darstellt. Dies wird durch eine so genannte Zuhaltung erreicht, d.h. die Verriegelungseinrichtung wird erst freigegeben, wenn ein Stillstandssignal oder ein ähnliches Signal von der Maschine vorliegt.

Eine aus WO 95/06323 A1 bekannte Verriegelungseinrichtung realisiert die Zuhaltung durch einen längsverschiebbaren Stößel im Rahmenteil, der dazu ausgebildet ist, ein Schaltrad in einem definierten Zustand festzulegen. Die Verriegelung einer Schutztür kann durch einen Betätiger in Form eines Schlüssels bewirkt werden, der am Türteil befestigt wird und in eine Aufnahme am Rahmenteil eingeführt wird. Dabei verdreht der Betätiger das Schaltrad so, dass der Stößel durch die Kraft einer Feder in eine Vertiefung des Schaltrades einrasten kann. Auf diese Weise kann eine Entnahme des Schlüssels aus der Aufnahme verhindert werden. Zur kontrollierten Freigabe des Schlüssels nach einem Maschinenstillstand ist der Stößel als Ankerteil eines Elektromagneten ausgebildet, so dass der Stößel beim Bestromen des Elektromagneten durch den Ankerhub aus der Rastposition in eine Freigabeposition überführt wird. Nunmehr kann der Schlüssel aus dem Gehäuse entnommen werden. Bei dieser bekannten Verriegelungseinrichtung ist das Schaltrad in einem ersten Gehäuseteil angeordnet, das in verschiedenen Positionen mit einem zweiten Gehäuseteil kombiniert werden kann, wobei der Stößel in dem zweiten Gehäuseteil sitzt. Dadurch können das Türteil und das Rahmenteil in verschiedenen Montagepositionen relativ zueinander verwendet werden.

Die bekannte Verriegelungseinrichtung erfordert allerdings recht geringe Montagetoleranzen. Das Türteil und das Rahmenteil müssen genau zu einander ausgerichtet sein, damit der Schlüssel in die Aufnahme des Rahmenteils eingreifen kann. Die geringen Montagetoleranzen resultieren daraus, dass der Betätiger sicher in der Aufnahme gehalten werden muss. Andererseits soll einer Manipulation der Verriegelungseinrichtung, etwa durch Einstecken eines isolierten Metallbolzens anstelle des Betätigers, entgegengewirkt werden. Daher sind die Betätiger solcher Verriegelungseinrichtungen in der Regel komplex geformte Teile, die mit genau angepassten Schalträdem zusammenwirken. In der Regel ist auch die Aufnahme für den Betätiger recht eng. Dies führt zu den geringen Montagetoleranzen.

Geringe Montagetoleranzen erschweren die Montage. Sie können im Lauf der Zeit Probleme bereiten, wenn sich die Schutztür aufgrund ihres Gewichts absenkt. Aus DE 10 2005 057 108 A1 ist daher eine Verriegelungseinrichtung mit einem Türteil und einem Rahmenteil bekannt, die größere Montagetoleranzen ermöglicht. Das Türteil weist einen Betätiger auf, der in eine relative große Tasche am Rahmenteil eingreifen kann. Ein Sperrglied zur Sperren des Betätigers ist am Türteil angeordnet. Diese bekannte Verriegelungseinrichtung bietet allerdings keine unterschiedlichen Montagepositionen von Türteil und Rahmenteil relativ zueinander und ist daher weniger flexibel einzusetzen.

Die eingangs genannte DE 197 35 859 A1 offenbart eine Verriegelungsvorrichtung zur Absicherung von Maschinen- und Anlagetüren gemäß dem Oberbegriff des Anspruchs 1, wobei der Betätiger in einem Ausführungsbeispiel einen kugelschichtförmigen Basisabschnitt aufweist, der in einer kappenförmigen Halterung gelagert ist. Die kappenförmig Halterung ist an die Geometrie des Basisteils angepasst. Dadurch kann der Betätiger in gewissem Umfang verschwenkt werden. Zur Fixierung des Betätigers in der Halterung sind Federelemente vorgesehen, die das Basisteil gegen die kappenförmige Aufnahme drücken. Gleichwohl kann der Betätiger entgegen den von den Federelementen hervorgerufenen Kräften verschwenkt werden.

DE 101 57 157 A1 offenbart einen Betätiger für eine Verriegelungseinrichtung, der über eine Blattfeder und zwei Schraubenfedern abgestützt ist und sich somit in gewissem Umfang bewegen kann.

Vor diesem Hintergrund ist es eine Aufgabe der Erfindung, eine Verriegelungseinrichtung der eingangs genannten Art anzugeben, die bei einfachem und möglichst robustem Aufbau und leichter Montierbarkeit eine sichere Verriegelung gewährleisten kann und flexibel einsetzbar ist. Darüber hinaus soll die Verriegelungseinrichtung eine große Montagetoleranz bieten können. Vorzugsweise soll die Verriegelungseinrichtung auch eine Zuhaltung im oben angegebenen Sinne ermöglichen.

Diese Aufgabe wird bei einer Verriegelungseinrichtung der eingangs genannten Art dadurch gelöst, dass das elastische Ausgleichselement aus einem Elastomer und/oder einem Gummimaterial ausgebildet ist und eine Mehrzahl von Stegen aufweist, die um einen Aufnahmebereich angeordnet sind, wobei sich die Stege zum Ausgleich einer Verlagerung zwischen dem Rahmenteil und dem Türteil definiert verformen können.

Es können mit dem elastischen Ausgleichselement Toleranzen, insbesondere Bauteilversatz oder -verlagerungen, zwischen der Schutztür und dem Türgegenstück ausgeglichen bzw. überwunden werden, so dass eine einfache Montage und ein sicherer Betrieb auch bei Verschleiß, Versatz durch Alterung oder Bauteilabweichungen ermöglicht werden kann.

Das elastische Ausgleichselement kann über ein ausgeprägtes Formänderungsvermögen verfügen, so dass die Toleranzen zum einen bei einer Erstmontage ausgeglichen werden können und zum anderen auch Abweichungen, welche sich erst im Zeitablauf ergeben, etwa Setzvorgänge oder durch Temperaturschwankungen bedingte Dimensionsschwankungen, ausgeglichen werden.

Es ist zuzufügen, dass die Belastungen des Türteils und des Rahmenteils bei einer Verlagerung zwischen der Schutztür und dem Türgegenstück im Vergleich zu Verriegelungseinrichtungen konventioneller Bauart sinken können, da nun diese Abweichungen durch eine definierte Auslenkung des Ausgleichselements "aufgefangen" werden, folglich die übrigen Komponenten nicht mehr aufgrund dieser Abweichungen in der Blockierposition "verspannt" zueinander ausgerichtet sind.

Im Sinne dieser Anmeldung versteht es sich, dass der Begriff "Schutztür" gleichwohl auch Klappen, Deckel, Hauben sowie im Besonderen auch Schiebetüren und Schwenktüren umfassen kann, generell also Elemente, welche die Zugänglichkeit zu einer Maschine oder Anlage gewährleisten sollen, jedoch bei deren Betrieb sicher und überwacht zu verschließen sein sollen.

Vorteilhaft ist das elastische Ausgleichselement aus einem Elastomer und/oder einem Gummimaterial ausgebildet.

Auf diese Weise kann das elastische Ausgleichselement besonders einfach, nämlich in nahezu beliebiger 3D-Gestalt hergestellt werden. Verformungseigenschaften des elastischen Ausgleichselements können hierbei durch die Ausgestaltung einfach beeinflusst werden, insbesondere ist es ermöglicht, wahlweise lineare, progressive oder degressive Kraft-Weg-Kennlinien zu bewirken, welche darüber hinaus auch richtungsabhängig sein können.

Vorteilhaft kann das elastisches Ausgleichselement stoffschlüssige Gelenke aufweisen, so dass sich das Formänderungsvermögen nicht lediglich auf die Verformung des Kunststoffmaterials selbst beschränkt, sondern darüber hinaus über Hebelverhältnisse oder richtungsabhängige Steifigkeiten ein anisotropes Formänderungsvermögen realisiert werden kann.

Auf diese Weise kann bspw. ein Höhenversatz zwischen der Schutztür und dem Türgegenstück im Bereich der Verriegelungseinrichtung besonders einfach ausgeglichen werden, indem das elastische Ausgleichselement in dieser Richtung besonders nachgiebig ausgelegt wird. Hinsichtlich anderer Abweichungen, etwa einem seitlichen Versatz zwischen der Schutztür und dem Türgegenstück kann das elastische Ausgleichselement hingegen bei Bedarf deutlich steifer ausgelegt werden, insbesondere dann, wenn die Schutztür in Richtung auf das Türgegenstück verschwenkbar ist und folglich ein seitlicher Versatz im Wesentlichen durch die Schwenkbewegung ausgeglichen werden kann.

Geeignete Kunststoff, insbesondere Elastomere, verfügen über eine gute Korrosionsbeständigkeit und können hinreichend resistent gegenüber Medien und Umwelteinflüssen ausgebildet sein, so dass die Verriegelungseinrichtung bei geringem Verschleiß und Reparaturaufwand betrieben werden kann.

Geeignete Verbindungsverfahren zwischen dem elastischen Ausgleichselement, dem Betätiger und dem Türteil können zum einen konventionelle Montageprozesse, wie etwa Klemmen oder Schrauben sein. Darüber hinaus können bei Kunststoff weitere Verfahren, insbesondere Kleben, Einbetten, Umspritzen oder geeignete Kombinationen, vorteilhaft zur Anwendung kommen. Elastomere Ausgleichselemente eignen sich ferner zum Vulkanisieren, sie können folglich direkt und sicher mit Metallteilen verbunden werden.

Vorzugsweise weist das elastische Ausgleichselement Verstärkungseinlagen auf, die weiter bevorzugt aus Kunstfasern bestehen.

Der Faserverbund kann dabei ein geordnetes oder ein ungeordnetes Gewebe aufweisen, das aus einem Drahtmaterial, aus Glasfasern, Aramidfasern, Kohlefasern oder dergleichen bestehen kann. Mit derartigen Verstärkungseinlagen kann die Festigkeit, insbesondere die Rissfestigkeit des elastischen Ausgleichselements deutlich erhöht werden, gleichwohl die elastischen Eigenschaften im Wesentlichen erhalten bleiben können. Alternativ oder zusätzlich kann für das elastische Ausgleichselement eine Abreißsicherung zwischen dem Betätiger und dem Türteil vorgesehen sein, welche ebenso aus den vorgenannten Materialien bestehen kann. Mit einer Abreißsicherung kann auch bei einem Versagen des elastischen Ausgleichselements der gesicherte, also der geschlossene Zustand aufrechterhalten werden.

Zudem weist das elastische Ausgleichselement eine Mehrzahl von Stegen auf (insbesondere zumindest drei), die um einen (vorzugsweise zentralen) Aufnahmebereich angeordnet sind. Vorzugsweise besitzen die Stege an ihrem dem Aufnahmebereich abgewandten Ende Zapfen, die vorteilhaft zylinderförmig sind.

Auf diese Weise kann das elastische Ausgleichselement in seinem elastischen Verhalten günstig beeinflusst werden. Zapfen an den Enden der Stege ermöglichen eine einfache und verdrehsichere Montage, beispielsweise in einem Montagerahmen mit drei-, vier- oder vieleckigen Grundriss. Das Ausgleichselement dieser Ausgestaltung kann eine sternförmige bzw. kreuzförmige Draufsicht aufweisen, welche in einer Tiefenrichtung extrudiert sein kann. Somit kann das elastische Ausgleichselement radial zur Extrusionsrichtung durch Verformung der Stege besonders nachgiebig sein, jedoch gegenüber seitlichen Belastungen, die im Wesentlichen in Extrusionsrichtung wirken, eine erhöhte Steifigkeit aufweisen.

In vorteilhafter Ausgestaltung weist der Betätiger einen Betätigerrahmen auf, in dem die Zapfen angeordnet sind, und weist das Türteil ein Aufnahmeprofil auf, an dem der Aufnahmebereich gelagert ist.

Durch diese Maßnahme kann das elastische Ausgleichselement vorteilhaft als stoffschlüssiges Drehgelenk, allgemeiner als stoffschlüssiges Kardangelenk fungieren. Das etwa mittig am Aufnahmebereich aufgenommene Türteil kann, sofern es die Elastizität des Ausgleichselements zulässt, gegenüber dem Betätigerrahmen, der das elastische Ausgleichselement etwa umschließen kann, verlagert werden, um Toleranzen zwischen der Schutztür und dem Türgegenstück auszugleichen.

Ferner kann durch die Gestaltung des Betätigerrahmens und des Türteils auf besonders einfache Weise ein Anschlag für das elastische Ausgleichselement realisiert werden, so dass übermäßige Belastungen und Verformungen des elastischen Ausgleichselements vermieden werden können. Die Zuverlässigkeit der Verriegelungseinrichtung kann weiter erhöht werden.

Weiter bevorzugt sind zumindest am Betätiger oder an der Aufnahme des Rahmenteils Einführschrägen vorgesehen.

Die Einführschrägen können dazu dienen, den Betätiger, der über das elastische Ausgleichselement nachgiebig aufgenommen ist, zwangsläufig auf die Aufnahme zuzuführen, so dass der eigentliche Sitz des Betätigers zum Toleranzausgleich nicht besonders ausgestaltet sein muss. Die Gestaltung der Einführschrägen, etwa trichterförmig, erlaubt es, maximal auszugleichende Abweichungen, also etwa den Versatz, bei dem der Betätiger beim Schließen der Schutztür selbsttätig in die Aufnahme gelangen kann, festzulegen. Hierbei ist es bevorzugt, einen Versatz von mindestens ± 5 mm, weiter bevorzugt, mindestens ± 10 mm ausgleichen zu können.

Es versteht sich, dass die Einführschrägen hinsichtlich eines Höhenversatzes bzw. eines Seitenversatzes oder aber im Hinblick auf Schrägstellungen zwischen dem Türteil und dem Rahmenteil richtungsabhängig verschiedene Abweichungen zulassen können.

Gemäß einer weiteren Ausgestaltung der Erfindung weist das Sperrglied zumindest eine Sperrgegenfläche und der Betätiger zumindest eine Sperrfläche auf, die dazu ausgebildet sind, den Betätiger in der Blockierposition formschlüssig gegenüber der Aufnahme festzulegen.

Eine formschlüssige Lagesicherung kann besonders hohe Kräfte aufnehmen und, verglichen etwa mit kraftschlüssigen Sicherungen, bei stoß- oder ruckartigen Belastungsspitzen nicht einfach nachgeben bzw. "durchrutschen". Es versteht sich dabei, dass der formschlüssigen Lagesicherung ebenso Kraftschlusskomponenten überlagert sein können. Eine Sicherung mittels eines Formschlusses kann besonders leicht mit einfachen Mitteln detektiert und überwacht werden.

In bevorzugter Ausgestaltung der Erfindung weist der Betätiger eine Freisparung auf, die einen Freiraum zur Verlagerung des Sperrglieds bestimmt, vorzugsweise ist die Freisparung zusammen mit der mindestens einen Sperrfläche am Betätiger als M-förmiger Einschnitt ausgebildet.

Durch diese Maßnahme kann insbesondere die Freigängigkeit des Betätigers bzw. des Sperrgliedes gewährleistet werden, auch wenn sich eine Verschmutzung oder Verunreinigung der Verriegelungseinrichtung, etwa durch Späne, ergeben sollte. Vorteilhaft ist das Sperrglied zur selektiven Festlegung oder Freigabe des Betätigers verlagerbar. Diese Bewegung erfolgt relativ zum Betätiger. Soll nun eine gesicherte Anlage, etwa ein Zerspanungszentrum, nach dem Betrieb zugänglich gemacht werden, so besteht die Möglichkeit, dass eine etwaige Verschmutzung, bspw. durch Späne, das Sperrglied an seiner Relativbewegung gegenüber dem Betätiger hindern kann. Erfindungsgemäß ist nun am Betätiger eine zusätzliche Freisparung vorgesehen, welche insbesondere bei einem Sperrglied, das gegenüber dem Betätiger verschwenkbar ist, die Verlagerung in die Freigabeposition auch dann ermöglicht, wenn sich Späne in dem Bereich zwischen dem Betätiger und dem Sperrglied befinden sollten, in den das Sperrglied bei seiner Verlagerung einfährt. Bei einem verschwenkbaren Sperrglied kann sich somit ein etwa M-förmiger Einschnitt am Betätiger ergeben, bei dem ein Bereich die mindestens eine Sperrfläche aufweist und der andere Bereich durch das Sperrglied verdrängte Späne oder dergleichen aufnehmen kann.

Gemäß einer Ausgestaltung der Erfindung, ist ein Aktor, vorzugsweise ein Elektromagnet, vorgesehen, der mit dem Sperrglied zu dessen Verlagerung gekoppelt ist.

Somit kann das Sperrglied besonders einfach, nämlich durch Bestromung des Elektromagneten, verlagert werden. Vorzugsweise ist der Elektromagnet als Hubmagnet ausgeführt, andere Bauformen sind denkbar. Ferner können andere Arten von Aktoren eingesetzt werden, bspw. Elektromotoren, insbesondere Linearmotoren, oder aber piezostriktive oder magnetostriktive Aktoren. Bei besonderen Umgebungsbedingungen können ebenso Aktoren zur Anwendung kommen, die Druckluft- oder Hydraulikzylinder aufweisen.

In bevorzugter Ausgestaltung der Erfindung ist eine Sicherungsfeder vorgesehen, die mit dem Sperrglied gekoppelt ist und das Sperrglied in Richtung auf die Blockierposition bewegt.

Die Sicherungsfeder ermöglicht eine selbsttätige Sicherung der Verriegelung, insbesondere dann, wenn der geschlossene Zustand auch stromlos, also etwa ohne Bestromung des Magneten, gehalten werden soll. Ferner kann eine automatische Verriegelung beim Zu- oder Einführen des Betätigers erfolgen, hierbei wird zunächst das Sperrglied gegen die Kraft der Sicherungsfeder durch den Betätiger verdrängt, um anschließend in der Blockierposition mit der zumindest einen Sperrfläche in die zumindest eine Sperrgegenfläche des Sperrgliedes durch die Kraft der Sicherungsfeder einzurasten. Auch auf diese Weise kann bei einfachem Aufbau ein besonders sicherer, nämlich selbsttätig verriegelnder Betrieb der Verriegelungseinrichtung gefördert werden.

Es ist hinzuzufügen, dass die Verriegelungseinrichtung bei Bedarf auch derart betrieben sein kann, dass das System stromlos offen ist. Hierbei kann eine Verriegelung durch immerwährende Bestromung des Aktors erfolgen. Diese Betriebsart kann sich dann anbieten, wenn etwa bei einem Versagen oder einer Störung der einzuhausenden Maschine oder Anlage ein schnelles Öffnen der Verriegelungseinrichtung wichtiger als eine unbedingte Zuhaltung erscheint.

Die Sicherungsfeder kann sich am Gehäuse des Rahmenteils abstützen und unmittelbar auf das Sperrglied einwirken, oder aber über Koppelglieder mit diesem verbunden sein.

Gemäß einer weiteren Ausgestaltung der Erfindung ist das Sperrglied am Rahmenteil längsverschieblich aufgenommen.

Somit kann das Sperrglied selbst als Teil des Aktors, etwa als Teil des Ankers des Magneten ausgeführt sein. Folglich führt der Hub des Magneten unmittelbar und direkt zu einer Verlagerung des Sperrglieds. Der Bauteil- und Fertigungsaufwand bei der Herstellung der Verriegelungseinrichtung kann sich reduzieren.

Es ist denkbar, das Sperrglied über Hebel oder Koppeltriebe mittelbar mit dem Aktor zu koppeln, um ggf. eine Kraft- und Wegübersetzung bei der Verlagerung des Sperrglieds bewirken zu können.

In vorteilhafter Ausgestaltung der Erfindung weist der Betätiger Konusflächen auf und ist am Rahmenteil ein damit korrespondierender Sitz mit Konusgegenflächen angeordnet, und ist das Sperrglied dazu ausgebildet, die Lage des Betätigers im Sitz zu sichern, vorzugsweise formschlüssig zu sichern.

Durch diese Maßnahme wird es ermöglicht, den Betätiger aus beliebigen Richtungen einer Zuführebene auf die Aufnahme zuführen zu können, da nun ein konischer, allgemeiner rotationssymmetrischer, Sitz verwirklicht ist, dessen Achse senkrecht zur Zuführebene ausgebildet sein kann. Somit können mit nur einer Ausgestaltung der Verriegelungseinrichtung verschiedene Zuführlagen bzw. Einbaupositionen verwirklicht werden, so dass sich die Variantenvielfalt und der Montageaufwand reduzieren lassen.

Mit anderen Worten begründen die Konusflächen und die Konusgegenflächen einen pfannenartigen Sitz des Betätigers am Rahmenteil. Die Zuführung des Betätigers kann radial zur Rotationsachse des Sitzes erfolgen, so dass das elastische Ausgleichselement ein Auslenken des Betätigers beim Überwinden einer Wandung der Konusgegenflächen ermöglichen kann.

Das Sperrglied kann hierbei ebenso radial in Richtung der Rotationsachse des Sitzes verlagerbar sein, um selektiv mit der mindestens einen Sperrfläche des Betätigers zu dessen Festlegung oder Freigabe zusammenzuwirken.

Dabei kann der Betätiger bspw. von drei zueinander jeweils um 90° versetzten Seiten dem Sitz zugeführt werden, während das Sperrglied von der vierten Seite auf den Betätiger zu dessen Festlegung einwirken kann.

Gemäß einer weiteren Ausgestaltung der Erfindung ist das Sperrglied auf einer um eine Achse verschwenkbaren Mitnehmerwelle abnehmbar aufgenommen, vorzugsweise formschlüssig aufgenommen.

Somit kann das Sperrglied zur Festlegung oder Freigabe des Betätigers um die Achse verschwenkt werden. Auch auf diese Weise kann eine Zuführung des Betätigers aus verschiedenen Richtungen auf die Aufnahme ermöglicht sein. Hierzu ist lediglich das Sperrglied entsprechend der Zuführrichtung auf der Mitnehmerwelle zu verdrehen, so dass die sich durch die Betätigung des Aktors oder die Rückstellkraft der Sicherungsfeder ergebende Schwenkbewegung des Sperrglieds dem Betätiger lagemäßig korrekt zugeordnet ist.

Besonders bevorzugt ist es, wenn das Sperrglied formschlüssig auf der Mitnehmerwelle aufgenommen ist. Der Formschluss kann über ein geeignetes Profil bereitgestellt werden, wobei die Teilung des Profils die verschiedenen möglichen Lagen des Sperrglieds auf der Mitnehmerwelle bestimmt. So können sich bei einem Vierkantprofil vier verschiedene, jeweils um 90° versetzte Lagen ergeben. Somit kann bei nur geringem Rüst- oder Umrüstaufwand eine Anpassung der Verriegelungseinrichtung an verschiedene Betriebs- oder Einbaubedingungen erfolgen, ohne dass Teile auszutauschen oder zusätzliche Teile zu berücksichtigen sind. Neben dem Sperrglied kann auch die Aufnahme, der der Betätiger zuführbar ist, entsprechend der Einführrichtung des Betätigers verlagert werden, so dass anhand der Einführschrägen die Zuführrichtung bestimmt ist. Alternativ kann die Aufnahme Einführschrägen für mehrere Zuführrichtungen aufweisen, so dass deren Umrüstung nicht erforderlich ist.

In bevorzugter Ausgestaltung der Erfindung ist zwischen dem Aktor und der Mitnehmerwelle ein Koppeltrieb angeordnet, der vorzugsweise als Schubschwinge ausgebildet ist.

Durch den Koppeltrieb kann eine Kraft- bzw. Wegübersetzung, eine Bewegungsumkehr sowie eine Überführung einer translatorischen Bewegung in eine rotatorische Bewegung oder umgekehrt erfolgen.

Somit können besonders einfache, zuverlässige und preiswerte Aktoren zur Verwendung kommen, auch wenn das Sperrglied nicht zusammen lineare Bewegungen ausführen soll.

Insbesondere eignet sich eine Schubschwinge, um die translatorische Bewegung eines Magnetankers in die rotatorische Bewegung, genauer Schwenkbewegung, des Sperrglieds zu überführen.

In einer besonders vorteilhaften Ausgestaltung, die auch unabhängig von dem elastischen Ausgleichselement eine Erfindung darstellt, ist am Rahmenteil ein Manipulationsdetektor vorgesehen, der dazu ausgebildet ist, zu erkennen, ob das Sperrglied montiert ist.

Vorteilhaft kann es sich um einen optischen Manipulationsdetektor, etwa um eine Lichtschranke, handeln, mit deren Hilfe die Anwesenheit des Sperrgliedes am Rahmenteil detektiert wird. Prinzipiell kann der Manipulationsdetektor aber auch mit einem induktiven, kapazitiven, magnetischen oder anderen Sensor realisiert sein, der die Anwesenheit des Sperrgliedes am Rahmenteil sicher detektiert. Bevorzugt ist es, wenn die Verriegelungseinrichtung ein Ausgangssignal bereitstellt, das bei Fehlen des Sperrgliedes ein Abschaltsignal repräsentiert und/oder umgekehrt bei detektierter Anwesenheit des Sperrgliedes ein Freigabesignal repräsentiert. Durch diese Ausgestaltung kann eine Manipulation, bspw. eine Demontage des Sperrgliedes zur Umgehung der Verriegelungseinrichtung, wirksam unterbunden werden.

Besonders vorteilhaft kann ein Koppelglied, das Teil des Koppeltriebs ist, und/oder das Sperrglied selbst einen Indikator aufweisen, auf den der Manipulationsdetektor anspricht. Es kann sich beispielsweise etwa um eine Lasche oder um eine Ausnehmung handeln, die die Lichtstrecke der Lichtschranke selektiv unterbrechen oder freigeben kann. Bei der Blockierposition kann etwa ein Anschlag des Sperrglieds an einer Anschlaggegenfläche der Aufnahme zur Anlage kommen, wobei die Sicherungsfeder noch in Richtung auf den Anschlag auf das Sperrglied einwirkt. Wird nun das Sperrglied entnommen, so kann die Sicherungsfeder eine weitere Verlagerung, etwa ein Verschwenken der Mitnehmerwelle über diese Anschlagposition hinaus, bewirken. Daraus resultiert ein Zustand, der bei korrekt montiertem Sperrglied nicht erreicht werden kann. In diesem Zustand kann nun durch den Indikator der Manipulationsdetektor angesprochen werden, um ein Ausgangssignal zu erzeugen, mit dem der Betrieb der einzuhausenden Maschine oder Anlage zum Schutz des Bedieners verhindert werden kann.

Gemäß einer weiteren Ausgestaltung der Erfindung ist am Betätiger ein Transponder und am Rahmenteil ein Lagedetektor aufgenommen, die derart zusammenwirken, dass bei einer Verriegelung, bei der der Betätiger am Rahmenteil festgelegt ist und sich das Sperrglied in der Blockierposition befindet, ein Freigabesignal erzeugbar ist.

Ein derartiger Transponder kann etwa eine RFID-Einheit sein, welche vom Rahmenteil aus ausgelesen werden kann.

Auf diese Weise kann eine Verriegelung besonders sicher erkannt werden, nämlich nur dann, wenn der Betätiger tatsächlich der Aufnahme zugeführt ist.

Vorzugsweise wird der Transponder drahtlos vom Lagedetektor mit Energie versorgt, so dass sich der Aufbau der Verriegelungseinrichtung deutlich vereinfacht, da dem Türteil keine Versorgungsleitungen zugeführt werden müssen.

Bei einer RFID-Einheit kann die Positionserkennung verschlüsselt durchgeführt werden, so dass eine Manipulation, bspw. mit einem weiteren RFID-Chip, weiter erschwert ist.

Es besteht die Möglichkeit, den Lagedetektor zum Auslesen der RFID-Einheit an der Aufnahme anzuordnen, so dass bereits das Zuführen des Betätigers erkannt werden kann. Alternativ kann der Lagedetektor am Sperrglied vorgesehen sein, um neben dem Zuführen des Betätigers auch die Verriegelung, nämlich das Festlegen des Betätigers durch das Sperrglied, sicher detektieren zu können.

Weiter bevorzugt ist es, wenn der Transponder eine Antenne sowie eine Signaleinheit aufweist, die über zumindest eine Leitung gekoppelt und voneinander beabstandet sind, vorzugsweise ist die Antenne in einen Bereich des Betätigers angeordnet, der bei der Verriegelung dem Sperrglied zugewandt ist, und ist die Signaleinheit in einem davon beabstandeten Bereich des Betätigers angeordnet, der dem Türteil zugewandt ist.

Auf diese Weise kann eine Beschädigung oder ein Versagen des Betätigers noch besser erkannt werden, da sich der Transponder bei dieser Ausgestaltung nahezu über die gesamte Länge des Betätigers erstreckt, bei einem Schaden können die zumindest eine Leitung oder die Antenne durchtrennt werden, so dass sich die Induktivität der Spulenantenne verändert. Somit kann auch bei einer weiterhin intakten Signaleinheit das Versagen sicher erkannt werden, da der Transponder entweder gar nicht mehr oder auf einer veränderten Frequenz sendet.

In zweckmäßiger Ausgestaltung der Erfindung ist ein Entriegelungsschalter vorgesehen, der mit dem Sperrglied gekoppelt ist, um dieses selektiv in Richtung auf die Freigabeposition zu bewegen.

Hierdurch kann eine Notentriegelung bewirkt werden, welche vorzugsweise mechanisch ausgebildet ist, um bei einem Systemversagen die Verriegelungseinrichtung öffnen zu können. Der Entriegelungsschalter ist vorrangig auf der Innenseite der Einhausung anzuordnen, um einem versehentlich eingeschlossenen Bediener in jedem Falle das Verlassen der Einhausung zu ermöglichen.

In bevorzugter Ausgestaltung der Erfindung ist eine Steuereinheit vorgesehen, die dazu ausgebildet ist, über eine Schnittstelle Signale zu empfangen, verarbeiten und zu senden, wobei die Schnittstelle zumindest einen Anschluss aufweist, mit einem ersten unidirektionalen Modus, bei dem der Anschluss entweder nur zum Senden oder Empfangen von Signalen ausgebildet ist, und mit einem zweiten, selektiv aktivierbaren Modus, bei dem der Anschluss nach Art eines bidirektionalen Anschlusses zum Senden und Empfangen von Signalen ausgebildet ist.

Somit können mehrere Verriegelungseinrichtungen, ggf. zusammen mit weiteren Sicherheitseinrichtungen, verschaltet werden, wobei eine Steuereinrichtung über eine Verkabelung angeschlossen ist. Hierbei kann die Verkabelung einfach mit wenigen Leitungen ausgeführt werden, da bei dem zweiten Modus mehrere Verriegelungseinrichtungen in Reihe verschaltet werden können.

Mit anderen Worten kann die Verriegelungseinrichtung in dem zweiten Modus über eine Busleitung angesteuert werden. Hierbei versteht es sich, dass bei der Verriegelungseinrichtung ein interner Bus vorgesehen sein kann, so dass bei einem selektiv aktivierbaren Busmodus Signale einer vorgeschalteten Verriegelungseinrichtung über einen Eingang empfangen, ggf. verarbeitet und über einen Ausgang zusammen mit durch die Verriegelungseinrichtung selbst erzeugten Signalen zu einer nachgeordneten Verriegelungseinrichtung und schließlich zu einer Steuereinrichtung weitergeleitet werden können.

Auf diese Weise kann eine Sicherheitsanordnung realisiert werden, bei der eine Steuereinrichtung über einen Bus ringartig oder linienartig mit der Verriegelungseinrichtung und zumindest einer weiteren Verriegelungseinrichtung oder zumindest einer Sicherheitseinrichtung verknüpft ist. Insbesondere kann somit eine sternartige Verkabelung, wie es bei diskreten Signalleitungen erforderlich wäre, vermieden werden. Eine derartige Sicherheitsanordnung kann mit geringem Aufwand installiert, abgeändert oder erweitert werden, wobei nur minimale Eingriffe in eine bestehende Verkabelung erforderlich sind.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische schematische Ansicht einer Anlage mit einer Sicherheitsanordnung mit einer erfindungsgemäßen Verriegelungseinrichtung;
- Fig. 2: eine perspektivische Ansicht eines erfindungsgemäßen Türteils im explodierten Zustand;
- Fig. 3: eine Seitenansicht des Türteils gemäß Fig. 2;
- Fig. 4: eine gebrochene Darstellung einer erfindungsgemäßen Verriegelungseinrichtung;
- Fig. 5: eine Detailansicht der Darstellung gemäß Fig. 4;
- Fig. 6: eine gebrochene Schnittansicht eines Rahmenteilgehäuses einer erfindungsgemäßen Verriegelungseinrichtung;
- Fig. 7: eine perspektivische Darstellung einer erfindungsgemäßen Verriegelungseinrichtung mit einem Entriegelungsschalter;
- Fig. 8: eine Vorderansicht einer erfindungsgemäßen Verriegelungseinrichtung mit verschiedenen möglichen Anordnungen des Türteils;
- Fig. 9: eine Seitenansicht der Verriegelungseinrichtung gemäß Fig. 8;
- Fig. 10: eine perspektivische Ansicht eines Rahmenteilgehäuses, wobei ein Sperrglied entnommen ist;
- Fig. 11: eine geschnittene Vorderansicht des Rahmenteilgehäuses gemäß Fig. 10;
- Fig. 12: eine perspektivische gebrochene Darstellung eines Rahmenteils einer alternativen erfindungsgemäßen Verriegelungseinrichtung;
- Fig. 13: eine perspektivische Darstellung eines Türteils, das dem Rahmenteil gemäß Fig. 12 zuführbar ist;
- Fig. 14: eine perspektivische Darstellung der erfindungsgemäßen Verriegelungseinrichtung mit dem Rahmenteil gemäß Fig. 12 und dem Türteil gemäß Fig. 13; und
- Fig. 15: eine vereinfachte schematische Darstellung einer Sicherheitsanordnung mit zwei erfindungsgemäßen Verriegelungseinrichtungen.

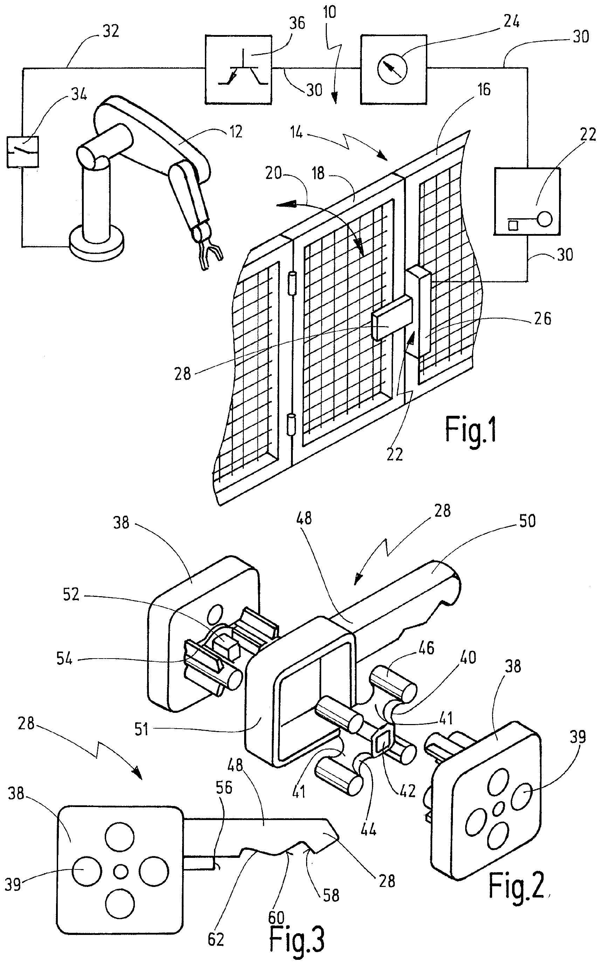

In Fig. 1 ist eine Sicherheitsanordnung mit einer erfindungsgemäßen Verriegelungseinrichtung 22 dargestellt und insgesamt mit 10 bezeichnet. Die Sicherheitsanordnung 10 dient dem sicheren Betrieb eines Roboters 12. Zu diesem Zweck ist eine Einhausung 14 vorgesehen (hier nur gebrochen dargestellt), die den Roboter 12 im Regelfall vollständig umschließen kann.

Es versteht sich, dass derartige Sicherheitsanordnungen auch zur Einhausung von Werkzeugmaschinen, Bearbeitungszentren, Gießereimaschinen, Transport- bzw. Handlingvorrichtungen, allgemein solcher Anordnungen zur Verwendung kommen können, deren Betrieb für unachtsames Personal potentiell gefährlich sein kann. Insbesondere sei in diesem Zusammenhang auf hohe Schließkräfte, etwa bei Pressen, hohe Umlaufgeschwindigkeiten, etwa bei Drehzentren, und weitläufige, kaum erfassbare Bewegungsbahnen, etwa bei Handlingrobotern, verwiesen. Ferner kann die Einhausung 14 zur Anwendung kommen, um Bediener oder weitere Personen vor Emissionen, bspw. Lärm, Vibrationen oder der Absonderung von Schadstoffen der einzuhausenden Anlagen zu schützen.

Zu Wartungszwecken, zur Beschickung, für Reparaturen oder aus anderen Anlässen ist es erforderlich, den von der Einhausung 14 umschlossenen Bereich zugänglich zu gestalten. Zu diesem Zweck weist die Einhausung 14 neben feststehenden Teilen, etwa einem Türgegenstück 16, eine Schutztür 18 auf, welche zum Öffnen der Einhausung 14 verschwenkbar ist, wie auch durch einen mit 20 bezeichneten Pfeil angedeutet.

Es ist ohne weiteres ersichtlich, dass es sich bei der Schutztür 18 auch um eine Schiebetür, eine Falttür, ein Scherengitter, eine Klappe oder ein anderes Element handelt, welches den von der Einhausung 14 umschlossenen Raum zugänglich machen kann.

Es gilt zu beachten, dass die Schutztür 18 nur dann geöffnet werden darf, wenn die einzuhausende Anlage, hier der Roboter 12, außer Betrieb gesetzt und im Falle eines Nachlaufs, etwa bei einer Werkzeugspindel, vollständig zum Stillstand gekommen ist. Umgekehrt darf eine Inbetriebnahme, also ein Einschalten des Roboters 12, nur dann erfolgen, wenn die Schutztür 18 sicher verschlossen ist.

Eine derartige Funktionalität wird auch als Zuhaltung bezeichnet. So ist an der Einhausung 14 eine Verriegelungseinrichtung 22 mit Zuhaltung angeordnet, bei der ein Rahmenteil 26 am Türgegenstück 16 und ein Türteil 28 an der Schutztür 18 vorgesehen ist.

Beispielhaft weist die Sicherheitsanordnung 10 zwei Verriegelungseinrichtungen 22 auf, von denen eine lediglich symbolisch dargestellt ist. Ferner ist eine weitere Sicherheitseinrichtung 24 vorgesehen, hierbei kann es sich etwa um einen Messaufnehmer zur Überwachung von Betriebsparametern des Roboters 12 handeln. Die Sicherheitseinrichtung 24 kann dazu ausgebildet sein, etwa Endlagen, Absolut- oder Relativbeschleunigungen, aufgenommene Lasten oder Betriebszeiten des Roboters 12 zu erfassen bzw. zu überwachen.

Die Verriegelungseinrichtungen 22 und die Sicherheitseinrichtung 24 sind über eine Anschlussleitung 30, wiederum nur stark vereinfacht dargestellt, mit einer Steuereinrichtung 36 verbunden, welche ferner über eine Sicherheitsleitung 32 mit einem Sicherheitsschalter 34 verbunden ist, der dazu ausgebildet ist, den Betrieb des Roboters 12 freizugeben. Dies soll insbesondere nur dann erfolgen, wenn die Verriegelungseinrichtungen 22 sicher geschlossen sind.

Die Zuhaltung kann etwa dahingehend erfolgen, dass nach dem Abschalten des Roboters 12 eine determinierte Auslaufzeit abgewartet wird und erst danach ein Öffnen der Verriegelung ermöglicht ist. Alternativ kann die Freigabe der Verriegelungseinrichtung 22 über ein Signal erfolgen, das den tatsächlichen Stilltand des Roboters 12, überwacht z.B. durch die Sicherheitseinrichtung 24, kennzeichnet. Auf diese Weise können Auslaufzeiten bedarfsgerecht reduziert werden, obgleich eine vorzeitige Freigabe der Verriegelungseinrichtung 22 weiterhin sicher verhindert ist.

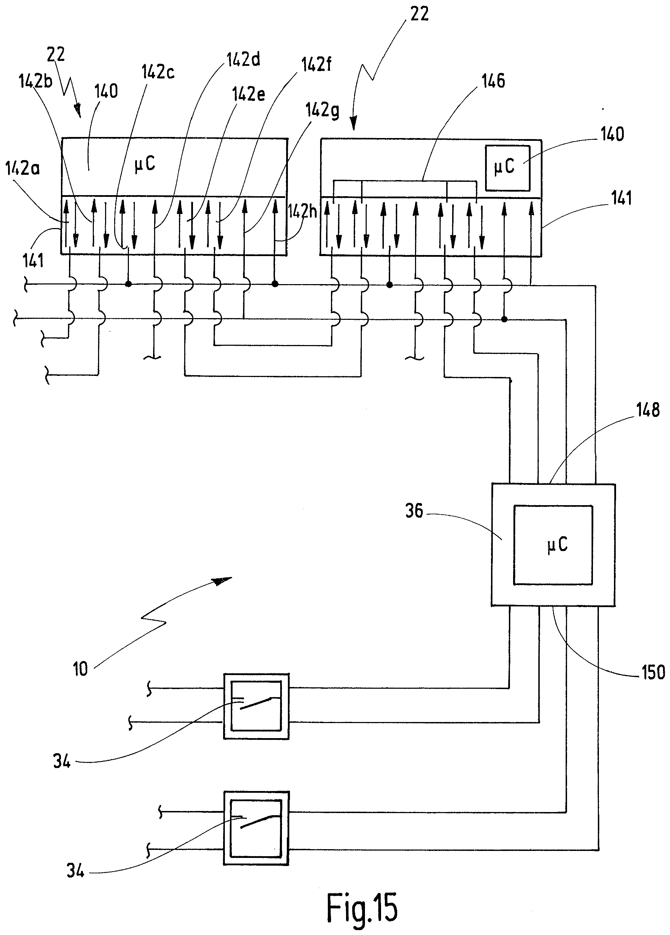

Zur näheren Beschreibung einer vernetzten Sicherheitsanordnung 10 und dem Zusammenwirken von Verriegelungseinrichtungen 22 mit einer zentralen Steuereinrichtung 36 sei hier schon auf die nachfolgenden Ausführungen zu Fig. 15 verwiesen.

Es hat sich gezeigt, dass Verriegelungseinrichtungen für Schutztüren von Einhausungen eine gewisse Toleranz gegenüber Gestaltabweichungen und Verlagerungen der Einhausung, insbesondere gegenüber Abweichungen bei der Ausrichtung von Schutztüren gegenüber Türgegenstücken, aufweisen sollen, um einen möglichst störungsfreien Betrieb und eine einfache Montage ohne gesonderte Ausricht- oder Justagevorgänge gewährleisten zu können.

So ist vorstellbar, dass im Stand der Technik bekannte Verriegelungseinrichtungen zwar auch bei einem Versatz, etwa einem durch Setzvorgänge bedingten Höhenversatz, geschlossen und verriegelt werden können, jedoch kann dies zu Verspannungen bei Bauteilen der Verriegelungseinrichtung führen und folglich zum einen verschleißerhöhend wirken, zum anderen zu Ausfällen und zum Versagen führen, so dass ein sicherer, störungsfreier Betrieb nicht mehr gewährleistet werden kann. Hierbei ist zu bedenken, dass Schutztüren von Einhausungen von Maschinen und Anlagen durchaus beträchtliche Abmessungen und Gewichte aufweisen können, bspw. ohne weiteres Massen von über 100 kg, über 200 kg oder sogar noch darüber hinaus. Somit können etwa beim abrupten Schließen einer dermaßen schweren Schutztür immense Stoßbelastungen auf die Verriegelungseinrichtung einwirken. Bekannte Verriegelungseinrichtungen weisen infolgedessen massive, steife und relativ große Bauteile auf, ohne dass dies für die eigentliche Verriegelung mit Zuhaltung erforderlich wäre, da damit im Wesentlichen nur Manipulationen durch Bedienoder Wartungspersonal vorgebeugt werden soll. Folglich sind bekannte Verriegelungseinrichtungen mit hohem Aufwand zu großen Kosten herstellbar, Montageund Justierprozesse können sehr aufwändig sein.

Erfindungsgemäß ist dagegen vorgesehen, ein elastisches Ausgleichselement vorzusehen, das dazu ausgebildet ist, derartige Toleranzen zwischen Schutztür und Türgegenstück zu überwinden, ferner jedoch auch im verriegelten Zustand eine gewisse Entkopplung zwischen der Schutztür und dem Türgegenstück zu bewirken, so dass sich die Belastung beteiligter Bauteile in Grenzen hält.

Fig. 2 zeigt ein erfindungsgemäßes Türteil 28, welches etwa mit dem Rahmenteil gemäß Fig. 1 die Verriegelungseinrichtung 22 bilden kann.

Das Türteil 28 weist ein Türteilgehäuse 38 (hier zweiteilig ausgebildet) auf, an dem ein elastisches Ausgleichselement 40 angeordnet ist. Das Ausgleichselement 40 weist eine Mehrzahl von Stegen 41 auf, die um einen Aufnahmebereich 42 angeordnet sind. Gemäß Fig. 2 kann sich im Wesentlichen eine Kreuzform ergeben, andere Ausgestaltungen, etwa sternförmig mit drei oder mehr Stegen 41, sind denkbar. Die Stege 41 weisen Ausnehmungen 44 auf, welche Bereiche verringerten Querschnitts darstellen, folglich die Verformbarkeit des Ausgleichselements 40 erhöhen.

An ihrem dem Aufnahmebereich 42 abgewandten Ende sind an den Stegen 41 Zapfen 46 angeordnet, welche eine Vorzugslage des Ausgleichselements 40 in einem Betätigerrahmen 51 bestimmen.

Das Ausgleichselement 40 ist über den Aufnahmebereich 42 am Türteilgehäuse und über die Zapfen 46 an einem Betätiger 48 aufgenommen. Der Betätiger 48 umfasst eine Betätigerspitze 50 und den Betätigerrahmen 51, der vorliegend als nahezu rechteckiger, insbesondere quadratischer Rahmen ausgebildet ist, in dessen Ecken die Zapfen 46 des Ausgleichselements 40 zur Anlage gelangen können.

Das Türteilgehäuse 38 weist ein Aufnahmeprofil 52 auf, an dem das elastische Ausgleichselement 40 über den Aufnahmebereich 42 aufgenommen ist.

Das Türteil 28 ist über das Türteilgehäuse 38 an der Schutztür 18 aufgenommen, dies kann etwa durch Schrauben an den Befestigungsöffnungen 39 erfolgen, wobei zur Erhöhung der Manipulationssicherheit die Schraubpunkte abgedeckt sein können oder aber an den Schraubenköpfen Sonderprofile vorgesehen sein können, so dass die Schraubverbindungen nicht mit handelsüblichen Werkzeugen gelöst werden können.

Beim Schließen der Schutztür 18, also dem Zuführen des Betätigers 48 zum Rahmenteil 26 können über das elastische Ausgleichselement 40 Abweichungen und Toleranzen zwischen dem Türteil 28 und dem Rahmenteil 26 ausgeglichen werden. Dieser Ausgleich kann auch dann noch erfolgen, wenn im geschlossenen Zustand der Verriegelungseinrichtung 22 der Versatz zwischen der Schutztür 18 und dem Türgegenstück 16 weiterhin besteht. Durch die Verformbarkeit des elastischen Ausgleichselements 40 wird auch bei derartigen Abweichungen eine übermäßige Belastung des Rahmenteils 26 bzw. des Türteils 28 vermieden.

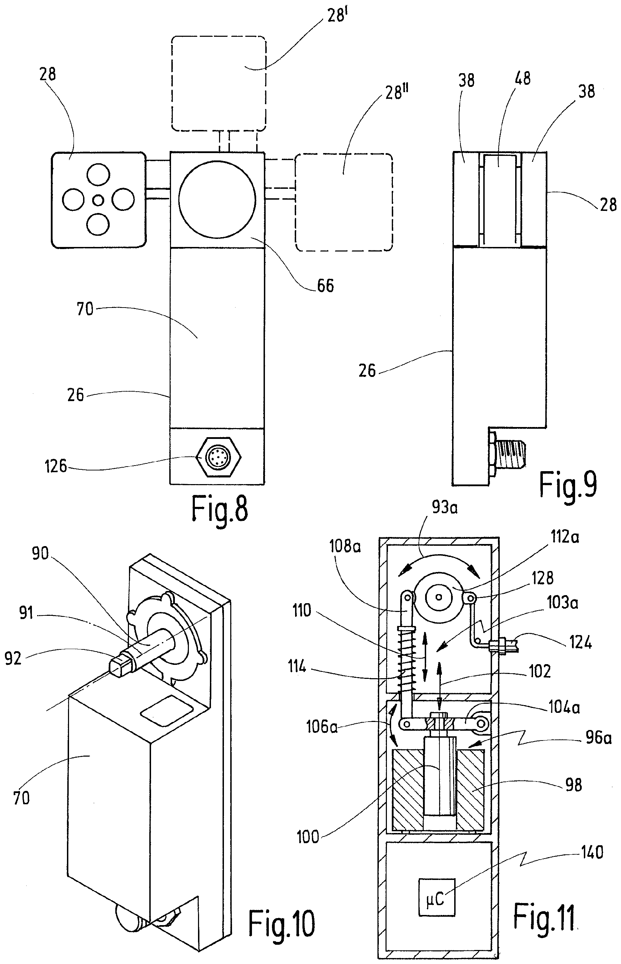

Das Ausgleichselement 40 selbst ist durch den Betätigerrahmen 51 und das Türteilgehäuse 38 im montierten Zustand hinreichend geschützt (vgl. auch Fig. 9), so dass trotz einer hohen Elastizität des Ausgleichselements 40, also einer unter Umständen besonders weichen Auslegung, Beschädigungen am Ausgleichselement 40 von außen vermieden werden können.

Anhand der Figuren 2, 3 und 9 ist ersichtlich, dass das elastische Ausgleichselement 40 insbesondere eine Verlagerung des Betätigers 48 gegenüber dem Türteilgehäuse 38 erlaubt, welche einer Bewegung des Betätigers 48 in einer Ebene, die parallel der Ansichtsebene in Fig. 3 ist, gegenüber dem Türteilgehäuse 38 entspricht. Diese Verlagerung kann zum einen eine Verdrehung, etwa um das Aufnahmeprofil 52 sein, ebenso ist eine geradlinige Verlagerung, ein Versatz, oder eine kombinierte Bewegung vorstellbar, die sich letztlich durch die vorhandene Lagerabweichung zwischen dem Rahmenteil 26 und dem Türteil 28 ergibt.

Zum Ausgleich der Verlagerung können sich die Stege 41 definiert verformen, bspw. biegen, längen oder zusammenstauchen. Am Türteilgehäuse 38 sind Verformungsanschläge 54 angeordnet, welche eine maximale Verformung des elastischen Ausgleichselements 40 bestimmen und somit Beschädigungen durch Überdehnungen vermeiden können. In Zusammenhang mit den Ausnehmungen 44 kann sich beim elastischen Ausgleichselement 40 eine progressive Charakteristik ergeben, etwa wenn die Ausnehmungen 44 bei relativ kleinen Auslenkungen eine hohe Nachgiebigkeit des Ausgleichselements 40 bewirken, die Verformungsanschläge 54 jedoch dazu ausgebildet sind, das Ausgleichselement 40 bei einer großen Auslenkung gewissermaßen zu versteifen.

Im Zusammenhang mit Fig. 9 ist zu erkennen, dass Auslenkungen, welche etwa einem Gieren des Betätigers 48 gegenüber dem Türteilgehäuse 38 entsprechen, deutlich enger begrenzt sein können, da der Betätiger 48 hierbei sehr schnell zur seitlichen Anlage am Türteilgehäuse 38 gelangen kann.

Bezug nehmend auf die Figuren 3, 4 und 5 wird das Sperren und Freigeben einer erfindungsgemäßen Verriegelungseinrichtung 22 erläutert.

Der Betätiger 48 ist mit der Betätigerspitze 50 in einer Aufnahme 66 des Rahmenteils 26 einführbar. Am Betätiger 48 ist ein Einführanschlag 56 vorgesehen, der ein zu tiefes Eindringen des Betätigers 48 in die Aufnahme 66 verhindert.

Ferner sind am Betätiger 48 Sperrflächen 58, 60 sowie eine Freisparung 62 ausgebildet ist. Vorliegend bilden Sperrflächen 58, 60 zusammen mit der Freisparung 62 insgesamt einen etwa M-förmigen Ausschnitt an dem Betätiger 48.

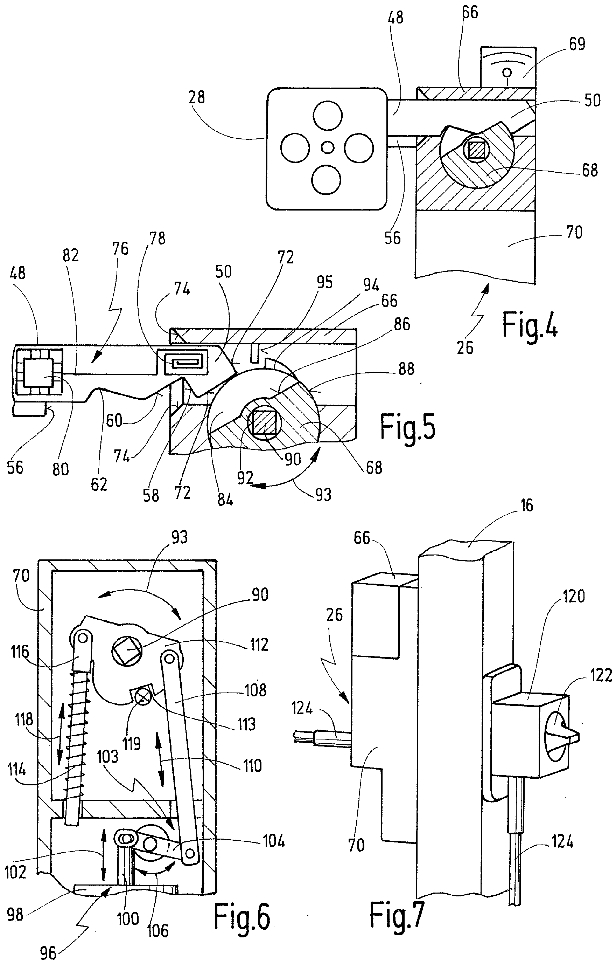

Das Rahmenteil 26 weist neben der Aufnahme 66 ferner ein Sperrglied 68 sowie einen Lagedetektor 69 auf. Gemäß der Ausgestaltung in Fig. 4 ist das Sperrglied 68 an der Aufnahme 66 angeordnet, welche an einem Rahmenteilgehäuse 70 aufgenommen ist.

Fig. 4 zeigt eine Stellung, die einer Blockierposition entspricht. Der Betätiger 48 ist der Aufnahme 66 zugeführt und durch das Sperrglied 68 an dieser festgelegt. In diesem Zustand kann die Schutztür 18 nicht geöffnet werden. Der Roboter 12 kann in Betrieb genommen werden.

Demgegenüber zeigt Fig. 5 dem Betätiger 48 beim Zuführen in Richtung auf die Aufnahme 66.

Um das Zuführen zu erleichtern, sind am Betätiger 48 Einführschrägen 72 sowie an der Aufnahme 66 Einführschrägen 74 ausgebildet, so dass gerade auch bei einer Verlagerung, zu deren Ausgleich die erfindungsgemäße Verriegelungseinrichtung 22 ausgebildet ist, der Betätiger 48 sicher seinen Weg zur Aufnahme 66 "findet".

Am Betätiger 48 ist ein Transponder 76 angeordnet, mit einer Antenne 78 und einer Signaleinheit 80, die über eine Leitung 82 verbunden sind. Der Lagedetektor 69 (in Fig. 5 nicht dargestellt) ist dazu ausgebildet, anhand eines Signals des Transponders 76 den eingeführten Zustand des Betätigers 48 zu erkennen. Vorzugsweise ist der Transponder 76 als RFID-Einheit ausgebildet. Die Signale werden drahtlos von der Antenne 78 zum Lagedetektor 69 übertragen. Der Lagedetektor 69 kann ferner dazu ausgebildet sein, den Transponder 76 mit Energie zu versorgen, dies kann über elektromagnetische Wellen erfolgen, unter deren Einwirkung eine Spule der Antenne 78 eine Spannung induzieren kann.

Alternativ kann der Transponder 76 auch als aktive RFID-Einheit ausgebildet sein, mithin eine eigene Energieversorgung, etwa über Batterien oder separate Versorgungsleitungen, aufweisen.

Gemäß der Darstellung in Fig. 5 ist die Antenne 78 von der Signaleinheit 80 deutlich beabstandet. Auf diese Weise kann eine mechanische Beschädigung des Betätigers 48, etwa ein Bruch, erkannt werden, da bei einem Versagen der Leitung 82, die wesentlichen Bereiche des Betätigers 48 durchziehen kann, keine Signalübertragung über die Antenne 78 mehr ermöglicht ist, so dass der Lagedetektor kein Freigabesignal ausgeben kann.

Wird der Betätiger 48 ausgehend von der Anordnung in Fig. 5 weiter in Richtung auf die Aufnahme zugeführt bzw. in diese eingeführt (also bei Fig. 5 nach rechts verschoben), so wird zunächst die Betätigerspitze 50 in einen Einführbereich 84 des Sperrgliedes 68 eindringen und die Einführschräge 72 eine Sperrgegenfläche 86 des Sperrglieds 68 kontaktieren, worauf das Sperrglied 68, wie durch den Pfeil 93 angedeutet, um eine Mitnehmerwelle 90 verschwenkt wird. Bei einem weiteren Vortrieb kann das Sperrglied 68 mit der Sperrgegenfläche 86 und einer Sperrgegenfläche 88 in eine durch die Sperrflächen 58, 60 gebildete Ausnehmung des Betätigers einrasten, vgl. auch Fig. 4. In diesem Zustand ist die Verriegelungseinrichtung 22 gesichert.

Die Freisparung 62, welche im verriegelten Zustand zusammen mit dem Einführbereich 84 einen Hohlraum definiert, kann auch im Falle einer Verschmutzung der Verriegelungseinrichtung 22, etwa durch Späne oder dergleichen, ein Entriegeln, somit ein Öffnen der Schutztür 18 ermöglichen. Zum Entriegeln muss nämlich das Sperrglied 68 ausgehend von der in Fig. 4 gezeigten Lage in Richtung auf eine Freigabeposition (in den Figuren 4 und 5, also im Uhrzeigersinn) verschwenkt werden, so dass die Sperrgegenflächen 86, 88 aus dem Eingriff mit den Sperrflächen 58, 60 herausgeführt werden, worauf der Betätiger 48 aus der Aufnahme 66 des Rahmenteils 26 entnommen werden kann. Die Freisparung 62 kann nun verhindern, dass Späne oder andere Fremdkörper die gewünschte Verlagerung des Sperrglieds 68 blockieren, wenn sie in den Einführbereich 84 gelangen. Mit anderen Worten schafft die Freisparung 62 eine "Lücke", in die derartige Fremdkörper hineingeschoben werden können, so dass mit deutlich erhöhter Sicherheit ein ausreichender Verschwenkwinkel des Sperrglieds 68 freigängig bleibt, um den Betätiger 48 in der Freigabeposition zu entriegeln.

Das Sperrglied 68 weist ferner einen Anschlag 94 auf, der das Verschwenken des Sperrglieds 68 in Richtung auf die Blockierposition zusammen mit einer Anschlaggegenfläche 95, die an der Aufnahme 66 vorgesehen ist, begrenzt.

In Zusammenhang mit den Figuren 6, 10 und 11 kann der Antrieb des Sperrglieds 68 dargelegt werden.

Das Sperrglied 68 ist an einem Mitnehmerprofil 92 der Mitnehmerwelle 90, die um eine Achse 91 verschwenkbar ist, aufgenommen. Fig. 10 zeigt den Zustand, bei dem das Sperrglied 68 mitsamt der Aufnahme 66 vom Rahmenteil 26 entfernt ist. Der Antrieb der Mitnehmerwelle 90 erfolgt über einen Aktor 96, der in den Figuren 6 und 11 vereinfacht als Elektromagnet dargestellt ist. Der Aktor 96 weist einen gestellfesten Topf 98 sowie einen verlagerbaren Anker 100 auf.

Der Anker 100 ist dazu ausgebildet, eine translatorische Bewegung, wie durch den Pfeil 102 angedeutet, auszuführen, um einen Koppeltrieb 103 anzutreiben. Gemäß Fig. 6 weist der Koppeltrieb 103 ein Koppelglied 104 auf, das, wie durch einen Pfeil 106 angedeutet, verschwenkbar ist, ferner ein Koppelglied 108, das im Wesentlichen, wie durch einen Pfeil 110 angedeutet, verschieblich ist, obgleich die Bewegung des Koppelglieds 108 nicht rein translatorisch ist. Das Koppelglied 108 wirkt auf ein weiteres Koppelglied 112 ein, um es, wie durch den Pfeil 93 angedeutet, zu verschwenken. Das Sperrglied 68 ist über die Mitnehmerwelle 90 verdrehsicher mit dem Koppelglied 112 verbunden. Ferner ist am Rahmenteilgehäuse 70 eine Sicherungsfeder 114 vorgesehen, die das Sperrglied 68 in Richtung auf die Blockierposition belastet. Die Sicherungsfeder 114 wirkt über ein weiteres Koppelglied 116 etwa in einer durch einen Pfeil 118 angedeuteten Richtung auf das Koppelglied 112 und somit auf das Sperrglied 68 ein.

Eine derartige Auslegung entspricht dem Regelfall, das Sperrglied 68 ist in einem Zustand, bei dem der Aktor 96 nicht bestromt ist, stets in Richtung auf die Blockierstellung bewegt (gemäß Fig. 5 folglich im Gegenuhrzeigersinn vorgespannt). Bei einem Zustand, in dem der Aktor 96 bestromt ist, drängt dieser das Sperrglied 68 entgegen der Federvorspannung in Richtung auf die Freigabeposition.

Für besondere Anwendungen kann dieses Prinzip umgekehrt werden, es ergibt sich eine Ausgestaltung, in der das Sperrglied stromlos auf die Freigabeposition hin bewegt wird und nur bei einer Bestromung in der Blockierposition verharrt.

Am Rahmenteilgehäuse 70 ist ein Manipulationsdetektor 119 angeordnet, der lediglich symbolhaft als optischer Sensor, etwa als Lichtschranke, angedeutet ist. Am Koppelglied 112 ist eine Aussparung 113 vorgesehen, die dazu ausgebildet ist, bei einer bestimmten Schwenklage des Koppelglieds 112 die Lichtschranke freizugeben, folglich den Manipulationsdetektor 119 ansprechen zu lassen. Auf diese Weise kann ein Zustand erkannt werden, der etwa der Darstellung in Fig. 10 entspricht, wenn also das Sperrglied 68 vom Rahmenteil 26 entfernt ist. Zu diesem Zweck sind an der Aufnahme 66 bzw. am Sperrglied 68 der Anschlag 94 bzw. die Anschlaggegenfläche 95 ausgebildet, welche, wie vorstehend erläutert, das Verschwenken des Sperrglieds 68 in Richtung auf die Blockierposition begrenzen, wobei vorgesehen ist, dass bei einer Anlage des Anschlags 94 an der Anschlaggegenfläche 95 (entgegen der Darstellung in Fig. 5) die Sicherungsfeder 114 das Sperrglied 68 weiter in Richtung auf den Anschlag vorspannt.

Durch den Anschlag 94 ist infolgedessen auch das Verschwenken des Koppelglieds 112 begrenzt. Wird nun das Sperrglied 68, ggf. zusammen mit der Aufnahme 66, vom Rahmenteil 26 entfernt, so entfällt diese Lagebegrenzung für das Koppelglied 112. Da weiterhin eine Vorspannung durch die Sicherungsfeder 114 anliegt, kann das Koppelglied 112 weiter verschwenkt werden in eine Lage, der die Darstellung in Fig. 6 entspricht, so dass nur in diesem Fall die Aussparung 113 den Manipulationsdetektor 119 freigibt und ein Signal ausgegeben werden kann, um eine Inbetriebnahme der einzuhausenden und zu sichernden Maschine zu vermeiden.

Fig. 7 zeigt ein Rahmenteil 26, dem ein Entriegelungsschalter 120 zugeordnet ist. Der Entriegelungsschalter 120 dient der Notentriegelung der Verriegelungseinrichtung 22, etwa wenn ein Bediener versehentlich innerhalb der Einhausung eingeschlossen wurde. Zu diesem Zweck ist der Entriegelungsschalter 120 z.B. am Türgegenstück 16 angeordnet. Der Entriegelungsschalter 120 darf insbesondere nicht von der Außenseite der Einhausung zu betätigen sein.

Der Entriegelungsschalter 120 weist einen Drehknopf 122 auf, der mechanisch, vorliegend durch einen Bowdenzug 124 mit dem Rahmenteil gekoppelt ist. Eine Betätigung des Drehknopfes 122 bewirkt über den Bowdenzug 124 ein Verschwenken des Sperrglieds 68, etwa mittelbar über das Koppelglied 112, in Richtung auf die Freigabeposition, wonach die Schutztür 18 geöffnet werden kann, um einen potentiellen Gefahrbereich schnell verlassen zu können.

Anhand der Figuren 8, 9 und 10 lässt sich die hohe Anwendungsvielfalt der erfindungsgemäßen Verriegelungseinrichtung 22 verdeutlichen.

Wie bereits ausgeführt, ist das Sperrglied 68 formschlüssig auf dem Mitnehmerprofil 92 der Mitnehmerwelle 90 angeordnet. Das Sperrglied 68 kann, ggf. zusammen mit der Aufnahme 66, von der Mitnehmerwelle 90 bzw. dem Rahmenteilgehäuse 70 gelöst werden, verdreht und anschließend in einer neuen Position montiert werden. Die sich beim Mitnehmerprofil 92, das als Vierkant ausgebildet ist, ergebenden Zuordnungen, welche jeweils Zuführrichtungen für das Türteil 28 darstellen, sind in Fig. 8 mit 28, 28' und 28" angedeutet. Somit kann mit nur einer Ausgestaltung, insbesondere ohne Teile austauschen oder ersetzen zu müssen, durch einen einfachen Umbau des Rahmenteils 26 eine Anpassung der Verriegelungseinrichtung 22 an verschiedenste Einsatzbedingungen erfolgen. So eignet sich die Zuführrichtung des Türteils 28 in Fig. 8 etwa für eine links angeschlagene Schiebetür, die Zuführrichtung des Türteils 28" für eine rechts angeschlagene Schiebetür und die Zuführrichtung des Türteils 28' für ein oben angeordnetes Rolltor.

Mit dem in Fig. 8 mit 126 bezeichneten Anschlussstecker kann das Rahmenteil 126 mit der Anschlussleitung 30 verbunden werden.

Fig. 11 zeigt einen alternativ ausgestalteten Koppeltrieb, der einem Aktor und einem Koppelglied zwischengeschaltet ist. Am Koppelglied ist eine Ausnehmung 128 angeordnet, in welche der Bowdenzug 124 eines Entriegelungsschalters 120, etwa gemäß Fig. 7, eingreifen kann.

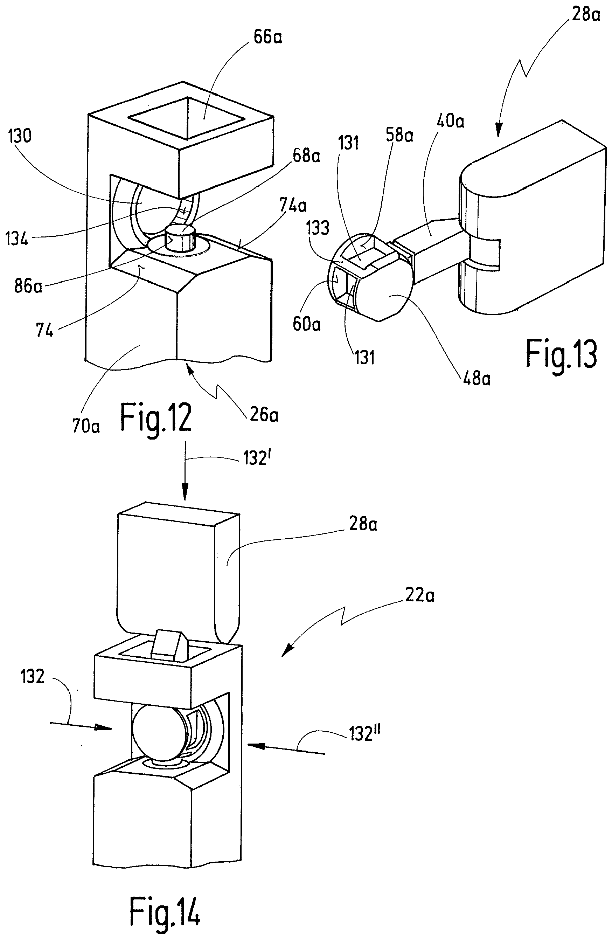

Die Figuren 12, 13 und 14 stellen eine alternative Ausgestaltung einer erfindungsgemäßen Verriegelungseinrichtung 22a dar.

Fig. 12 zeigt ein Rahmenteil 26a, das ein Sperrglied 68a aufweist, das zur Festlegung eines Betätigers 48a (vgl. Fig. 13) translatorisch verlagerbar ist. Am Rahmenteil 26a ist ferner ein konischer Sitz 130 ausgebildet, der Konusgegenflächen 134 aufweist, in den der Betätiger 48a eingeführt werden kann. Der Betätiger 48a weist hierzu passende Konusflächen 133 auf. Es ergibt sich eine pfannenartige Aufnahme für den Betätiger 48a. Der Betätiger 48a ist über ein elastisches Ausgleichselement 40a an einem Türteil 28a aufgenommen.

Der konische Sitz 130 ermöglicht aufgrund seiner rotationssymmetrischen Gestaltung eine Zuführung des Betätigers 48a aus verschiedenen Richtungen, wie durch die Pfeile 132, 132', 132" in Fig. 14 angedeutet ist.

Zur Festlegung des Betätigers 48a sind an diesem ebenso Sperrflächen 58a, 60a ausgebildet, welche in Ausnehmungen 131 angeordnet sind. Hierbei gilt es zu beachten, dass aufgrund der verschiedenen möglichen Zuführrichtungen 132, 132' und 132" ebenso eine Zugänglichkeit der Sperrflächen 58a, 60a an verschiedenen Positionen des Betätigers 48a gewährleistet sein muss.

Fig. 14 zeigt den Betätiger 48a entlang der Zuführrichtung 132' in den konischen Sitz 130 eingeführt und durch das Sperrglied 68a mit einer Sperrgegenfläche 86a gegen die Sperrfläche 60a gesichert. Somit ist ein Lösen des Betätigers 48a aus dem konischen Sitz 130 verhindert, so dass der geschlossene Zustand der Verriegelungseinrichtung 22a gesichert ist. Es ist hinzuzufügen, dass bei einer Belastung des Türteils 28a in Richtung auf eine Offenstellung der Verriegelungseinrichtung 22a, also etwa entgegen dem Pfeil 132' in Fig. 14, der konische Sitz 130 einen Großteil dieser Last aufnehmen kann und das Sperrglied 68a, das im Wesentlichen nur ein Lösen des Betätigers 48a aus dem konischen Sitz 130 zu verhindern hat, nur einen geringen Anteil dieser Last zu ertragen hat. Somit kann das Sperrglied 68a relativ klein ausgeführt sein, während die Verriegelungseinrichtung 22a hohen Kräften standhalten kann.

Fig. 15 zeigt schematisch stark vereinfacht eine Verschaltung einer Sicherheitsanordnung 10 mit zwei Verriegelungseinrichtungen 22, einer Steuereinrichtung 36 und zwei Sicherheitsschaltern 34. Wie eingangs erwähnt, kann die Sicherheitsanordnung 10 weitere Sicherheitseinrichtungen umfassen.

Die Steuereinrichtung 36 ist dazu ausgebildet, von den Verriegelungseinrichtungen 22 über eine Systemschnittstelle 148 Signale zu empfangen, zu verarbeiten und hiervon abhängig über eine Systemschnittstelle 150 die Sicherheitsschalter 34 anzusteuern, um eine zu sichernde Maschine oder Anlage in Betrieb zu nehmen oder abschalten zu können.

Um den Verkabelungs- und Anschlussaufwand zu minimieren, ist es vorgesehen, mehrere Verriegelungseinrichtungen 22 zu koppeln und über eine gemeinsame Leitung mit der Steuereinrichtung 36 zu verbinden. Die Leitung ist dabei vorteilhaft als Busleitung ausgeführt, so dass im Vergleich zu einer diskreten Verkabelung deutlich weniger Leiter gebraucht werden.

Die Verriegelungseinrichtung 22 weist eine Steuereinheit 140 auf, die über eine Schnittstelle 141, die eine Mehrzahl von Anschlüssen 142 aufweist, die als unidirektionale oder bidirektionale Anschlüsse ausgebildet sein können, mit der Steuereinrichtung 36 verbunden ist.

Die Anschlüsse 142a, 142b, 142c, 142e und 142f sind als bidirektionale Anschlüsse ausgeführt, während die Anschlüsse 142d, 142g und 142h als unidirektionale Anschlüsse ausgebildet sind. Es ist erkennbar, dass die Anzahl der Anschlüsse 142 der Verriegelungseinrichtung 22 größer ist als die Anzahl der Leiter, welche über die Systemschnittstelle 148 der Steuereinrichtung 36 zugeführt werden. Dies kann ermöglicht werden, indem ein interner Bus 146 zur Anwendung kommt, der die Signale einzelner Anschlüsse bei einem Busmodus nach Art eines Busses bündelt, und diese über eine reduzierte Anzahl von Leitern der Steuereinrichtung zur Verfügung stellt.

Zur Kopplung oder Verschaltung mehrerer Verriegelungseinrichtungen 22 ist es vorgesehen, einzelne Anschlüsse 142, welche etwa im Regelfall nur zur Ausgabe, nicht aber zum Empfang von Signalen ausgebildet sind, in einem bidirektionalen Modus zu betreiben, so dass neben der Ausgabe von Signalen auch Signale, welche von einer weiteren Verriegelungseinrichtung 22 kommen, empfangen werden können. Auch hier kann nach Art eines Busses ein empfangenes Signal einer vorgeordneten Verriegelungseinrichtung 22 aufbereitet und zusammen mit dem Signal der aktuellen Verriegelungseinrichtung 22 nach Art eines Busses einer weiteren, nachgeordneten Verriegelungseinrichtung 22 (nicht dargestellt) zugesandt werden.

Sowohl der interne Busmodus, der der Bündelung von Signalen, die durch eine Verriegelungseinrichtung 22 erzeugt sind, dient, als auch der externe Busmodus, der der Signalbündelung bei der Verschaltung mehrere Verriegelungseinrichtungen 22 dient, können selektiv aktivierbar sein, so dass die erfindungsgemäße Verriegelungseinrichtung 22 ebenso autark betrieben und diskret verkabelt bzw. angesteuert werden kann.

Gemäß der Darstellung in Fig. 15 ist der Anschluss 142d nicht mit der Steuereinrichtung 36 gekoppelt. Hierbei kann es sich etwa um eine Versorgungsleitung handeln, welche z.B. für den Aktor 96 gemäß Fig. 6 eine Versorgungsspannung bereitstellt, wobei die Ansteuerung des Aktors 96 jedoch abhängig von einem Steuersignal der Steuereinrichtung 36 erfolgen kann. Es versteht sich, dass diese Versorgungsleitung ebenso mit der Steuereinrichtung 36 gekoppelt sein kann.

Im Rahmen der Erfindung ist es gelungen, eine Verriegelungseinrichtung anzugeben, die bei einfachem Aufbau sicher betrieben werden kann, sich im Betrieb durch große Robustheit und insbesondere hohe Toleranz gegenüber Gestaltabweichungen der zu verriegelnden Bauteile auszeichnet und die ferner multidirektional angeordnet und besonders einfach bei geringem Aufwand angeschlossen bzw. vernetzt werden kann.

## Patentansprüche

1. Verriegelungseinrichtung mit Zuhaltung für Schutztüren, mit einem Türteil (28) zur Befestigung an einer beweglichen Schutztür (18) und mit einem Rahmenteil (26) zur Befestigung an einem Türgegenstück (16), wobei das Rahmenteil (26) eine Aufnahme (66) aufweist und das Türteil (28) einen Betätiger (48) aufweist, der der Aufnahme (66) zuführbar ist, wobei das Rahmenteil (26) ferner ein Sperrglied (68) aufweist, das zwischen einer Freigabeposition, bei der der Betätiger (48) selektiv freigegeben werden kann, und einer Blockierposition, bei der der Betätiger (48) selektiv gegenüber der Aufnahme (66) festlegbar ist, verlagerbar ist, wobei der Betätiger (48) über ein elastisches Ausgleichselement (40) an dem Türteil (28) aufgenommen ist, **dadurch gekennzeichnet, dass** das elastische Ausgleichselement (40) aus einem Elastomer und/oder einem Gummimaterial ausgebildet ist, und eine Mehrzahl von Stegen (41) aufweist, die um einen Aufnahmebereich (42) angeordnet sind, wobei sich die Stege (41) zum Ausgleich einer Verlagerung zwischen dem Rahmenteil (26) und dem Türteil (28) definiert verformen können.

2. Verrieglungseinrichtung (22) nach Anspruch 1, **dadurch gekennzeichnet, dass** die Stege (41) an ihrem dem Aufnahmebereich (42) abgewandten Ende Zapfen (46) aufweisen.

3. Verriegelungseinrichtung (22) nach Anspruch 2, **dadurch gekennzeichnet, dass** der Betätiger (48) einen Betätigerrahmen (51) aufweist, in dem die Zapfen (46) angeordnet sind, und dass das Türteil (28) ein Aufnahmeprofil (52) aufweist, an dem der Aufnahmebereich (42) gelagert ist.

4. Verriegelungseinrichtung (22) nach einem der vorhergehenden Ansprüche, **dadurch gekennzeichnet, dass** das Sperrglied (68) zumindest eine Sperrgegenfläche (86, 88) und der Betätiger (48) zumindest eine Sperrfläche (58, 60) aufweist, die dazu ausgebildet sind, den Betätiger (48) in der Blockierposition formschlüssig gegenüber der Aufnahme (66) festzulegen.

5. Verriegelungseinrichtung (22) nach einem der vorhergehenden Ansprüche, **dadurch gekennzeichnet, dass** der Betätiger (48) eine Freisparung (62) aufweist, die einen Freiraum zur Verlagerung des Sperrglieds (68) bestimmt, wobei die Freisparung (62) vorzugsweise zusammen mit der mindestens einen Sperrfläche (58, 60) am Betätiger (48) als M-förmiger Einschnitt ausgebildet ist.

6. Verriegelungseinrichtung (22) nach einem der vorhergehenden Ansprüche, **gekennzeichnet durch** einen Aktor (96), vorzugsweise einen Elektromagneten, der mit dem Sperrglied (68) zu dessen Verlagerung gekoppelt ist.

7. Verriegelungseinrichtung (22) nach einem der vorhergehenden Ansprüche, **gekennzeichnet durch** eine Sicherungsfeder (114), die mit dem Sperrglied (68) gekoppelt ist und das Sperrglied (68) in Richtung auf die Blockierposition bewegt.

8. Verriegelungseinrichtung (22) nach einem der vorhergehenden Ansprüche, **dadurch gekennzeichnet, dass** der Betätiger (48) Konusflächen (133) aufweist und am Rahmenteil (26) ein damit korrespondierender Sitz (130) mit Konusgegenflächen (134) angeordnet ist, und dass das Sperrglied (68) dazu ausgebildet ist, die Lage des Betätigers (48) im Sitz (130) zu sichern, vorzugsweise formschlüssig zu sichern.

9. Verriegelungseinrichtung (22) nach einem der vorhergehenden Anspruch, **dadurch gekennzeichnet, dass** das Sperrglied (68) auf einer um eine Achse (91) verschwenkbaren Mitnehmerwelle (90) abnehmbar aufgenommen ist, vorzugsweise formschlüssig aufgenommen ist.

10. Verriegelungseinrichtung (22) nach Anspruch 9, **dadurch gekennzeichnet, dass** ein Koppeltrieb (103) zwischen dem Aktor (96) und der Mitnehmerwelle (90) angeordnet ist, der vorzugsweise als Schubschwinge ausgebildet ist.

11. Verriegelungseinrichtung (22) nach einem der vorhergehenden Ansprüche, **dadurch gekennzeichnet, dass** am Rahmenteil (26) ein Manipulationsdetektor (119) vorgesehen ist, der dazu ausgebildet ist, zu erkennen, ob das Sperrglied (68) montiert ist.

12. Verriegelungseinrichtung (22) nach einem der vorhergehenden Ansprüche, **dadurch gekennzeichnet, dass** am Betätiger (48) ein Transponder (76) und am Rahmenteil (26) ein Lagedetektor (69) aufgenommen ist, die derart zusammenwirken, dass bei einer Verriegelung, bei der der Betätiger (48) am Rahmenteil (26) festgelegt ist und sich das Sperrglied (68) in der Blockierposition befindet, ein Freigabesignal erzeugbar ist.

13. Verriegelungseinrichtung (22) nach einem der vorhergehenden Ansprüche, **gekennzeichnet durch** einen Entriegelungsschalter (120), der mit der Sperrglied (68) gekoppelt ist, um dieses selektiv in Richtung auf die Freigabeposition zu bewegen.

14. Verriegelungseinrichtung (22) nach einem der vorhergehenden Ansprüche, **gekennzeichnet durch** eine Steuereinheit (140), die dazu ausgebildet ist, über eine Schnittstelle (144) Signale zu empfangen, verarbeiten und zu senden, wobei die Schnittstelle (141) zumindest einen Anschluss (142) aufweist, mit einem ersten unidirektionalen Modus, bei dem der Anschluss (142) entweder nur zum Senden oder Empfangen von Signalen ausgebildet ist, und mit einem zweiten, selektiv aktivierbaren Modus, bei dem der Anschluss (142) nach Art eines bidirektionalen Anschlusses zum Senden und Empfangen von Signalen ausgebildet ist.

## Claims

1. A locking apparatus with tumbler for safety doors, said locking apparatus comprising a door part (28) for fastening on a movable safety door (18) and comprising a frame part (26) for fastening on a door counterpart (16), wherein the frame part (26) has a receptacle (66) and the door part (28) has an actuator (48) configured to be inserted into the receptacle (66), wherein the frame part (26) further has a blocking member (68) which is displaceable between a release position, in which the actuator (48) can be selectively released, and a blocking position in which the actuator (48) is selectively securable relative to the receptacle (66), wherein the actuator (48) is arranged on the door part (28) via an elastic compensating element (40), **characterized in that** the elastic compensating element (40) is made of an elastomer and/or a rubber material and has a plurality of webs (41) which are arranged about a receiving region (42), wherein the webs (41) can deform in a defined manner in order to compensate for any displacement between the frame part (26) and the door part (28).

2. The locking apparatus (22) of claim 1, **characterized in that** the webs (41) have journals (46) on their end remote from the receiving region (42).

3. The locking apparatus (22) of claim 2, **characterized in that** the actuator (48) has an actuator frame (51) in which the journals (46) are arranged, and the door part (28) has a receiving profile (52) on which the receiving region (42) is mounted.

4. The locking apparatus (22) of one of the preceding claims, **characterized in that** the blocking member (68) has at least one blocking counter surface (86, 88) and the actuator (48) has at least one blocking surface (58, 60), which surfaces are configured to secure the actuator (48) in the blocking position in a form-fit manner in relation to the receptacle (66).

5. The locking apparatus (22) of one of the preceding claims, **characterized in that** the actuator (48) has a recess (62) which defines a space for displacing the blocking member (68), wherein the recess (62) is preferably realized together with the at least one blocking surface (58, 60) on the actuator (48) as an M-shaped incision.

6. The locking apparatus (22) of one of the preceding claims, **characterized by** a drive (96), preferably a solenoid magnet, which is coupled to the blocking member (68) for the displacement of said blocking member.

7. The locking apparatus (22) of one of the preceding claims, **characterized by** a safety spring (114) which is coupled to the blocking member (68) and pushes the blocking member (68) in the direction of the blocking position.

8. The locking apparatus (22) of one of the preceding claims, **characterized in that** the actuator (48) has cone surfaces (133) and the frame part (26) has a seat (130) having cone counter surfaces (134) matching the cone surfaces, and the blocking member (68) is configured to secure the position of the actuator (48) in the seat (130), preferably in a form-fit manner.

9. The locking apparatus (22) of one of the preceding claims, **characterized in that** the blocking member (68) is arranged so as to be removable, preferably is arranged in a form-fit manner, on an entrainment shaft (90) which is pivotable about an axis (91).

10. The locking apparatus (22) of claim 9, **characterized in that** a coupling element (103), which is preferably realized as a thrust rocker, is arranged between the drive (96) and the entrainment shaft (90).

11. The locking apparatus (22) of one of the preceding claims, **characterized in that** a manipulation detector (119) for detecting whether the blocking member (68) is mounted, is provided on the frame part (26).

12. The locking apparatus (22) of one of the preceding claims, **characterized in that** a transponder (76) is arranged on the actuator (48) and a position detector (69) is arranged on the frame part (26), said transponder and position detector cooperating in such a manner that a release signal can be generated when the actuator (48) is secured on the frame part (26) and the blocking member (68) is situated in the blocking position,.

13. The locking apparatus (22) of one of the preceding claims, **characterized by** an unlocking switch (120), which is coupled to the blocking member (68) in order to move said blocking member in a selective manner in the direction of the release position.

14. The locking apparatus (22) of one of the preceding claims, **characterized by** a control unit (140) designed for receiving, processing and transmitting signals by means of an interface (144), wherein the interface (141) has at least one connection (142), with a first unidirectional mode where the connection (142) is realized either only for transmitting or for receiving signals, and with a second, selectively activatable mode where the connection (142) is realized in the manner of a bidirectional connection for transmitting and receiving signals.

## Revendications

1. Dispositif de verrouillage avec gâchette pour portes de protection, comprenant une partie de porte (28) pour la fixation à une porte de protection mobile (18) et une partie de cadre (26) pour la fixation à une pièce conjuguée de porte (16), la partie de cadre (26) présentant un logement (66) et la partie de porte (28) présentant un dispositif d'actionnement (48) qui peut être amené au logement (66), la partie de cadre (26) présentant en outre un organe de verrouillage (68) qui peut être déplacé entre une position de libération dans laquelle le dispositif d'actionnement (48) peut être libéré de manière sélective, et une position de blocage dans laquelle le dispositif d'actionnement (48) peut être fixé de manière sélective par rapport au logement (66), le dispositif d'actionnement (48) étant reçu par le biais d'un élément de compensation élastique (40) au niveau de la partie de porte (28), **caractérisé en ce que** l'élément de compensation élastique (40) est réalisé à partir d'un élastomère et/ou d'un matériau à base de caoutchouc, et présente une pluralité de nervures (41) qui sont disposées autour d'une région de réception (42), les nervures (41) pouvant se déformer de manière définie pour compenser un décalage entre la partie de cadre (26) et la partie de porte (28).

2. Dispositif de verrouillage (22) selon la revendication 1, **caractérisé en ce que** les nervures (41) présentent des tourillons (46) au niveau de leur extrémité opposée à la région de réception (42).

3. Dispositif de verrouillage (22) selon la revendication 2, **caractérisé en ce que** le dispositif d'actionnement (48) présente un cadre de dispositif d'actionnement (51) dans lequel sont disposés les tourillons (46), et **en ce que** la partie de porte (28) présente un profil de réception (52) sur lequel est supportée la région de réception (42).

4. Dispositif de verrouillage (22) selon l'une quelconque des revendications précédentes, **caractérisé en ce que** l'organe de verrouillage (68) présente au moins une surface conjuguée de verrouillage (86, 88) et le dispositif d'actionnement (48) présente au moins une surface de verrouillage (58, 60), lesquelles sont réalisées de manière à fixer le dispositif d'actionnement (48) par rapport au logement (66) par engagement par correspondance de formes dans la position de blocage.

5. Dispositif de verrouillage (22) selon l'une quelconque des revendications précédentes, **caractérisé en ce que** le dispositif d'actionnement (48) présente un évidement (62) qui définit un espace libre pour le déplacement de l'organe de verrouillage (68), l'évidement (62) étant réalisé de préférence conjointement avec l'au moins une surface de verrouillage (58, 60) sur le dispositif d'actionnement (48) en tant qu'entaille en forme de M.

6. Dispositif de verrouillage (22) selon l'une quelconque des revendications précédentes, **caractérisé par** un actionneur (96), de préférence un électroaimant qui est accouplé avec l'organe de verrouillage (68) en vue de son déplacement.

7. Dispositif de verrouillage (22) selon l'une quelconque des revendications précédentes, **caractérisé par** un ressort de fixation (114) qui est accouplé à l'organe de verrouillage (68) et qui déplace l'organe de verrouillage (68) dans la direction de la position de blocage.

8. Dispositif de verrouillage (22) selon l'une quelconque des revendications précédentes, **caractérisé en ce que** le dispositif d'actionnement (48) présente des surfaces coniques (133) et au niveau de la partie de cadre (26) est disposé un siège (130) correspondant à celle-ci avec des surfaces conjuguées coniques (134), et **en ce que** l'organe de verrouillage (68) est réalisé pour fixer, de préférence par engagement par correspondance de formes, la position du dispositif d'actionnement (48) dans le siège (130).

9. Dispositif de verrouillage (22) selon l'une quelconque des revendications précédentes, **caractérisé en ce que** l'organe de verrouillage (68) est reçu de préférence par engagement par correspondance de formes de manière amovible sur un arbre d'entraînement (90) pouvant pivoter autour d'un axe (91).

10. Dispositif de verrouillage (22) selon la revendication 9, **caractérisé en ce qu'**un entraînement à bielle (103) est disposé entre l'actionneur (96) et l'arbre d'entraînement (90), lequel est réalisé de préférence sous forme de bielle de poussée.

11. Dispositif de verrouillage (22) selon l'une quelconque des revendications précédentes, **caractérisé en ce qu'**un détecteur de manipulation (119) est prévu au niveau de la partie de cadre (26), lequel est réalisé de manière à détecter si l'organe de verrouillage (68) est monté.

12. Dispositif de verrouillage (22) selon l'une quelconque des revendications précédentes, **caractérisé en ce qu'**un transpondeur (76) est reçu au niveau du dispositif d'actionnement (48) et un détecteur de position (69) est reçu au niveau de la partie de cadre (26), lesquels coopèrent de telle sorte que dans le cas d'un verrouillage dans lequel le dispositif d'actionnement (48) est fixé sur la partie de cadre (26) et l'organe de verrouillage (68) se trouve dans la position de blocage, un signal de libération puisse être généré.

13. Dispositif de verrouillage (22) selon l'une quelconque des revendications précédentes, **caractérisé par** un commutateur de déverrouillage (120) qui est accouplé à l'organe de verrouillage (68) afin de déplacer celui-ci de manière sélective dans la direction de la position de libération.

14. Dispositif de verrouillage (22) selon l'une quelconque des revendications précédentes, **caractérisé par** une unité de commande (140) qui est réalisée de manière à recevoir, traiter, et envoyer des signaux par le biais d'une interface (144), l'interface (141) présentant au moins un raccordement (142) avec un premier mode unidirectionnel dans lequel le raccordement (142) est réalisé soit seulement pour envoyer soit seulement pour recevoir des signaux, et avec un deuxième mode activable de manière sélective dans lequel le raccordement (142) est réalisé à la manière d'un raccordement bidirectionnel pour envoyer et recevoir des signaux.
